# EUROPÄISCHE PATENTANMELDUNG

(11) **EP 4 837 864 A1**
(43) Veröffentlichungstag der Anmeldung: **11.11.2026**
(21) Anmeldenummer: 26161241.0
(22) Anmeldetag: 30.04.2025
(51) Int. Cl.: B65G 17/20, B65G 43/02, B65G 47/61

(54) **TASCHENFÖRDERER MIT EINER ÜBERWACHUNGSEINHEIT SOWIE EIN VERFAHREN ZUM ÜBERPRÜFEN EINES ENTLADEZUSTANDS UND/ODER EINES SCHLIESSZUSTANDS EINER TASCHE IN EINEM TASCHENFÖRDERER**

(62) Dokumentnummer(n) der früheren Anmeldung(en) nach Art. 76 EPÜ: 25173587.4 / 4 834 804
(71) Anmelder: BEUMER Group GmbH & Co. KG, 59269 Beckum (DE)
(72) Erfinder: Müller, Robert, 8010 Graz (AT); Hiebler, David, 8020 Graz (AT)
(74) Vertreter: Angerhausen, Christoph

(57) **Zusammenfassung**

Die Erfindung betrifft einen Taschenförderer (1), insbesondere Taschensorter, mit einer Vielzahl Taschen (2), die entlang einer Förderstrecke (3) des Taschenförderers (1) gefördert sind, wobei der Taschenförderer (1) zumindest eine Entladestation (4) zum automatischen Entladen der Vielzahl Taschen (2) aufweist. Der Taschenförderer (1) weist zumindest eine Überwachungseinheit (5) auf, die in Förderrichtung (x) der Taschen (2) entlang der Förderstrecke (3) hinter oder direkt an der zumindest einen Entladestation (4) angeordnet ist und dazu ausgebildet und eingerichtet ist, mindestens eine der Vielzahl Taschen (2), insbesondere visuell, zu erfassen und basierend auf dem Erfassen einen Zustand, insbesondere durch Vergleichen des erfassten Istzustands der mindestens einen Tasche (2) mit einem Sollzustand der mindestens einen Tasche (2), der mindestens einen Tasche (2) zu bestimmen. Die Erfindung ist weiterhin auf ein Verfahren zum Überprüfen eines Zustands, insbesondere eines Entladezustands und/oder eines Schließzustands, einer Tasche (2) in einem Taschenförderer (1), insbesondere in einem erfindungsgemäßen Taschenförderer (1) gerichtet.

## Beschreibung

Die vorliegende Erfindung bezieht sich auf einen Taschenförderer und ein Verfahren zum Überprüfen eines Entladezustands und/oder eines Schließzustands einer Tasche in einem Taschenförderer. Insbesondere bezieht sich die vorliegende Erfindung auf einen Taschenförderer mit einer Überwachungseinheit, die dazu ausgebildet und eingerichtet ist, durch, insbesondere visuelles, Erfassen einen Zustand mindestens einer Tasche zu bestimmen, um einen automatischen Entladeprozess des Taschenförderers zu optimieren.

In gängigen Anwendungsfällen weisen Taschensorter mehrere 10.000 Taschen auf, die für eine automatische Taschenentladung jeweils mit einem von einem Antrieb betätigten Verriegelungsmechanismus ausgestattet sein können. Aus dem Stand der Technik bekannte Taschen zur automatischen Entladung sind beispielsweise in der EP 4 168 330 A1 und der DE 10 2018 201 675 A1 offenbart.

Weiterer Stand der Technik ist bekannt aus AU 2019 294 099 A1, EP 3 581 523 A1, EP 3 712 091 A1, US 2020/130952 A1, JP S60 178119 A, EP 4 389 653 A1, EP 4 410 715 A1, EP 2 885 231 B1, JP 2000 177835 A und EP 3 972 917 B1.

Auch wenn bekannte Systeme den Förderprozess überwachen und steuern, bestehen weiterhin Herausforderungen, insbesondere in Bezug auf die Genauigkeit und Zuverlässigkeit von automatisierten Entlade- und Schließprozessen. So wird in bekannten Systemen ein korrektes automatisches Entladen von Gegenständen aus Taschen durch Lichtgitter überprüft, die mechanisch an jedem Abwurfpunkt in einem Entladebereich angebracht sind. Dies ist nicht nur kostspielig, sondern auch fehleranfällig, da es sehr komplex ist, festzustellen, welche Tasche einen Gegenstand abgeworfen haben sollte und welche Tasche tatsächlich einen Gegenstand in einen Abwurfpunkt abgeworfen hat. Mit derzeitigen Lösungsansätzen ist es daher sehr schwierig, sicher und zuverlässig zu überprüfen, dass ein in einer Tasche enthaltener Gegenstand beim Verlassen des Entladebereichs abgeworfen ist.

Weiterhin gibt es derzeit keinen Mechanismus, mit dem überprüft werden kann, ob die Taschen nach dem Schließprozess erfolgreich geschlossen sind. Fehlerhaft geschlossene Taschen führen allerdings regelmäßig zu Problemen bei einem erneuten Ladevorgang. Bestehende Ansätze zur Überwachung und Steuerung von Taschenförderern sind somit oft nicht in der Lage, eine umfassende und genaue Bestimmung des Entlade- und/oder Schließzustands der Taschen durchzuführen. Dies kann zu einer erhöhten Fehlerquote und einer verminderten Zuverlässigkeit des Systems führen.

Es ist daher die Aufgabe der Erfindung, einen Taschenförderer und ein Verfahren zum Bestimmen eines Entladezustands mindestens einer Tasche bereitzustellen, die die Nachteile bekannter Systeme zumindest teilweise überwinden, so dass eine Zuverlässigkeit und Kosteneffizienz von Taschenförderern verbessert werden können.

Diese Aufgabe wird durch einen Taschenförderer mit den Merkmalen des Anspruchs 1, und einem entsprechenden Verfahren zum Überprüfen eines Entladezustands und/oder Schließzustands einer Tasche nach Anspruch 13 gelöst. Die abhängigen Ansprüche betreffen jeweils vorteilhafte Ausführungsformen der Erfindung.

Demgemäß ist ein Taschenförderer, insbesondere Taschensorter, mit einer Vielzahl Taschen, die entlang einer Förderstrecke des Taschenförderers gefördert sind, vorgesehen. Der Taschenförderer weist dabei zumindest eine Entladestation zum automatischen Entladen der Vielzahl Taschen auf, wobei der Taschenförderer zumindest eine Überwachungseinheit aufweist, die in Förderrichtung der Taschen entlang der Förderstrecke hinter oder direkt an der zumindest einen Entladestation angeordnet ist und dazu ausgebildet und eingerichtet ist, mindestens eine der Vielzahl Taschen, insbesondere visuell, zu erfassen und basierend auf dem Erfassen einen Zustand der mindestens einen Tasche zu bestimmen. Das Bestimmen des Zustands kann dabei insbesondere durch Vergleichen des erfassten Istzustands der mindestens einen Tasche mit einem Sollzustand der mindestens einen Tasche erfolgen.

Der Begriff "Taschenförderer" bezieht sich auf ein Fördersystem, das speziell dafür konzipiert ist, Taschen zu transportieren. "Taschensorter" ist eine besondere Art des Taschenförderers, der darauf ausgelegt ist, Taschen zu sortieren und zu verteilen. Die "Förderstrecke" bezeichnet den Weg, den die Taschen entlang des Förderers zurücklegen. Eine "Entladestation" ist ein Bereich, in dem die Taschen automatisch entladen werden. Eine Entladestation kann dabei mehrere Abwurfpunkte beziehungsweise Entladestellen aufweisen. Die "Überwachungseinheit" ist ein Gerät oder System, das die Taschen, insbesondere visuell, erfasst und ein Auswerten der erfassten Daten ausführen und/oder veranlassen kann.

Dadurch, dass die Überwachungseinheit die mindestens eine Tasche selbst erfasst, ermöglicht die Erfindung das Bestimmen des Zustands, insbesondere eines Entladezustands, der erfassten Tasche. Im Vergleich zum aus dem Stand der Technik bekannten Systemen ist damit keine komplizierte und fehleranfällige Zuordnung von entleertem Gegenstand zu einer entsprechenden Tasche erforderlich. Vielmehr ist der bestimmte Zustand unmittelbar mit der entsprechenden, erfassten Tasche verknüpft. Durch die Positionierung der Überwachungseinheit hinter oder direkt an der Entladestation kann eine einzige zentrale Überwachungseinheit ausreichend sein, selbst wenn die Entladestation mehrere Abwurfpunkte aufweist. Denn da das Bestimmen des Entladezustands auf der Erfassung der Tasche selbst anstelle eines Erfassens eines abgeworfenen Gegenstands erfolgt, ist ein Vorsehen einer Überwachungseinheit an jedem Abwurfpunkt nicht erforderlich.

Das Bestimmen des Zustands umfasst bevorzugt das Bestimmen eines Entladezustands und/oder eines Schließzustands der zumindest einen Tasche. Alternativ oder zusätzlich kann das Bestimmen des Zustands aber auch ein Bestimmen eines aus der Tasche heraushängenden Gegenstands und/oder eines Defekts an der Tasche umfassen. So kann insbesondere vorgesehen sein, dass der Sollzustand einem geöffneten Zustand der Tasche entspricht und der erfasste Istzustand beispielsweise einen Abstand zweier Schließelemente der Tasche, insbesondere zweier Taschenbodenhälften, umfasst.

Weiterhin kann vorgesehen sein, dass das Vergleichen des Istzustands und des Sollzustands auf einem oder mehreren erfassten Merkmalen der zumindest einen Tasche erfolgt. Ein solches Merkmal kann beispielsweise eine Dicke, eine Höhe, eine Oberflächenbeschaffenheit, eine Wölbung, eine Breite, ein Kontrast, ein Abstand, insbesondere zwischen beweglichen Elementen der Tasche, der zumindest einen Tasche sein.

Weiterhin kann vorgesehen sein, dass die Überwachungseinheit hinter oder direkt an einer Schließstation des Taschenförderers angeordnet ist, wobei die Schließstation in Förderrichtung hinter der Entladestation angeordnet ist. Die Schließstation ist dabei ausgebildet und eingerichtet, die Taschen nach der automatischen Entladung zu schließen. Die Überwachungseinheit kann dann insbesondere dazu ausgebildet und eingerichtet sein, auch einen Schließzustand mindestens einer Tasche basierend auf dem Erfassen zu bestimmen. Alternativ oder zusätzlich kann eine erste Überwachungseinheit hinter oder direkt an der Entladestation und eine zweite Überwachungseinheit hinter oder direkt an der Schließstation angeordnet sein. So kann die erste Überwachungseinheit mindestens eine Tasche nach dem automatischen Entladen erfassen und, insbesondere durch Vergleichen des erfassten Istzustands der mindestens einen Tasche mit einem Sollzustand der mindestens einen Tasche, den Entladezustand der Tasche bestimmen und die zweite Überwachungseinheit mindestens eine Tasche nach dem Schließen erfassen und, insbesondere durch Vergleichen des erfassten Istzustands der mindestens einen Tasche mit einem Sollzustand der mindestens einen Tasche, den Schließzustand bestimmen.

Nach einer Ausführungsform weist die Überwachungseinheit zum Erfassen mindestens einen Sensor auf. Bevorzugt ist der Sensor dabei ein optischer Sensor, insbesondere eine Kamera mit Echtzeiterkennung. So kann der Sensor beispielsweise als LiDAR (Light detection and ranging), ToF (time of flight), APD (avalanche photodiode, Lawinenphotodiode), SPAD (single-photon avalanche diode), Ultraschallsensor, Sonar sowie ein Radar und/oder Mikrowellensensor für FMCW (frequency-modulated continuous-wave radar) oder UWB (Ultra-wideband) ausgebildet sein. Besonders bevorzugt ist der Sensor als TOF-Sensor (Time of Flight) ausgebildet, der sich durch seine Fähigkeit auszeichnet, präzise Entfernungen zu messen und dreidimensionale Bilder zu erzeugen. Ein TOF-Sensor ermöglicht somit eine genaue Erfassung der Position und des Zustands der Taschen, was für die Bestimmung des Entladezustands vorteilhaft ist.

Vorzugsweise ist die Überwachungseinheit ausgebildet und eingerichtet, mindestens eine der Vielzahl Taschen zumindest von einer Seite zu erfassen. Die zumindest eine Seite kann dabei eine Unterseite, eine Oberseite, eine Vorderseite, eine Rückseite und/oder eine linke oder rechte Längsseite sein. Bevorzugt ist die Überwachungseinheit ausgebildet und eingerichtet, die Tasche von einer Seite zu erfassen, über die die Tasche entladen wird. Denn bei einer geöffneten Tasche kann die Überwachungseinheit so erfassen, ob ein Gegenstand in der Tasche ist oder diese leer ist. Zusätzlich oder alternativ kann die Überwachungseinheit so einen Schließzustand der Tasche vorteilhaft bestimmen.

Insbesondere kann die Überwachungseinheit ausgebildet und eingerichtet sein, mindestens eine der Vielzahl Taschen von einer Unterseite zu erfassen. So kann die Überwachungseinheit beispielsweise basierend auf dem Erfassen bestimmen, ob die Tasche an ihrer Unterseite zum Entladen geöffnet oder geschlossen ist. Wenn das Bestimmen eine geöffnete Tasche ergibt, kann die Überwachungseinheit zudem bestimmen, ob ein Gegenstand in der Tasche ist oder diese entleert ist. Alternativ oder zusätzlich kann die Überwachungseinheit basierend auf dem Erfassen von der Unterseite einen Schließzustand der Tasche bestimmen. Bevorzugt umfasst die Überwachungseinheit hierzu einen als Kamera, insbesondere echtzeitfähige Kamera ausgeführten Sensor, der die Tasche von unten filmen kann.

Weiterhin kann die Überwachungseinheit ausgebildet und eingerichtet sein, mindestens eine der Vielzahl Taschen zumindest von einer Längsseite zu erfassen. Dies ermöglicht insbesondere eine Dicke der mindestens einen Tasche zu bestimmen. Über die bestimmte Dicke kann die Überwachungseinheit dann auf den Entlade- und/oder Schließzustand der Tasche rückschließen. Hierfür umfasst die Überwachungseinheit insbesondere einen als LiDAR (Light detection and ranging), ToF (time of flight), APD (avalanche photodiode, Lawinenphotodiode), SPAD (single-photon avalanche diode) oder Ultraschallsensor ausgeführten Sensor.

Dabei kann insbesondere vorgesehen sein, dass die Überwachungseinheit ausgebildet und eingerichtet ist, mindestens eine der Taschen von mehr als einer, insbesondere gegenüberliegenden und/oder rechtwinklig zueinander orientierten Seiten zu erfassen. In einer bevorzugten Ausführungsform kann etwa vorgesehen sein, die mindestens eine Tasche, insbesondere zeitgleich, von einer Unterseite, einer Längsseite und einer Oberseite zu erfassen. Durch das Erfassen von mehreren Seiten kann eine Zuverlässigkeit und Genauigkeit beim Bestimmen des Entlade- und/oder Schließzustands der Tasche verbessert werden. Hierfür kann die Überwachungseinheit zwei oder mehr Sensoren umfassen, die die mindestens eine der Vielzahl Taschen von unterschiedlichen, insbesondere gegenüberliegenden und/oder rechtwinklig zueinander orientierten Seiten erfassen.

Nach einer Ausführungsform weist der Taschenförderer eine Steuereinheit auf, die ausgebildet und eingerichtet ist, von der zumindest einen Überwachungseinheit beim Erfassen ermittelte Daten zu empfangen und zu analysieren und basierend auf dem Analysieren das Bestimmen des Zustands, insbesondere des Entladezustands und/oder des Schließzustands, mindestens einer der Taschen durchzuführen. Die Steuereinheit kann dabei als integrale Einheit der Überwachungseinheit oder als externe Einheit ausgebildet sein. Eine Kommunikation zur Datenübertragung zwischen der Überwachungseinheit und der Steuereinheit erfolgt über geeignete Kommunikationsmechanismen, die eine zuverlässige und schnelle Übertragung der erfassten Daten sicherstellen. Diese Mechanismen können drahtgebunden oder drahtlos sein und ermöglichen eine Echtzeitüberwachung und Steuerung der Taschen.

Vorzugsweise umfasst die Steuereinheit zum Analysieren der erfassten Daten der zumindest einen Überwachungseinheit maschinelles Lernen. Durch die Integration von maschinellem Lernen in die Steuereinheit wird eine fortschrittliche Datenanalyse ermöglicht, die eine präzisere und effizientere Bestimmung des Entladezustands der Taschen erlaubt. Maschinelles Lernen bezieht sich auf die Fähigkeit von Systemen, aus Daten zu lernen und sich selbst zu verbessern, ohne explizit programmiert zu sein. So ist in einer bevorzugten Ausführungsform vorgesehen, dass das maschinelle Lernen ein vorhergehendes Trainieren eines in der Steuereinheit hinterlegten Algorithmus und ein laufendes Verbessern des Algorithmus umfasst. Somit ist die Steuereinheit in der Lage, Muster und Anomalien in den erfassten Daten zu erkennen und darauf basierend den Entlade- und/oder Schließzustand mindestens einer der Vielzahl Taschen zu bestimmen. Mittels kontinuierlichen Lernens und stetiger Anpassung an neue Daten im Laufe der Zeit kann die Steuereinheit zudem immer präzisere und zuverlässigere Ergebnisse liefern. Dies ist besonders vorteilhaft in Umgebungen, in denen sich die Bedingungen häufig ändern oder in denen eine hohe Variabilität bei den zu fördernden Taschen besteht. Alternativ oder zusätzlich kann die Steuereinheit zum Analysieren der erfassten Daten Algorithmen zur Bildverarbeitung und Mustererkennung umfassen.

Vorzugsweise ist der Taschenförderer ausgebildet und eingerichtet, basierend auf dem bestimmten Zustand die jeweilige Tasche der Vielzahl Taschen einer Pufferstation, einer Abfertigungsstation, einer Schließstation oder einer Rückführung zuzuführen. So kann verhindert oder aber ein Risiko zumindest reduziert werden, dass eine nicht korrekt entladene oder verschlossene Tasche einem erneuten Beladen zugeführt wird, und/oder ermöglicht werden, eine nicht korrekt entladene Tasche in einer Abfertigungsstation, beispielsweise durch Entnehmen eines Gegenstands, zu entladen.

Als Pufferstation wird hier ein Bereich verstanden, in dem entladene und geschlossene Taschen zwischengespeichert werden können, um von dort erneut für ein Beladen eingesetzt zu werden. Es kann auch vorgesehen sein, dass die Pufferstation umgangen und eine korrekt entladene und geschlossene Tasche direkt einem erneuten Beladen zugeführt wird. Als Abfertigungsstation wird ein Bereich verstanden, in dem insbesondere nicht korrekt entladene Taschen manuell geprüft werden können. Der Schließstation können korrekt entladene Taschen zum Verschließen zugeführt werden.

Das Zuführen erfolgt dabei basierend auf dem bestimmten Zustand. Ergibt das Bestimmen des Zustands, dass eine Tasche nicht korrekt entladen ist, führt der Taschenförderer die entsprechende Tasche der Abfertigungsstation zu. Ergibt das Bestimmen des Zustands, dass eine Tasche korrekt entladen ist, führt der Taschenförderer die entsprechende Tasche der Schließstation zu. Ergibt das Bestimmen des Zustands, dass eine Tasche nicht korrekt geschlossen ist, führt der Taschenförderer die entsprechende Tasche erneut der Schließstation zu. Hierfür kann beispielsweise eine Rückführung vorgesehen sein. Ergibt das Bestimmen des Zustands, dass eine Tasche korrekt geschlossen ist, führt der Taschenförderer die entsprechende Tasche der Pufferstation oder direkt einer Beladestation zu.

Nach einer Ausführungsform weist die Vielzahl von Taschen jeweils eine individuelle Kennung auf. Die individuelle Kennung kann dabei als QR- oder Barcode, aber insbesondere elektronisch, beispielsweise als RFID-Transponder ausgeführt sein. Mittels der individuellen Kennung ermöglicht die Erfindung eine präzise Identifikation und Nachverfolgung einer bestimmten Tasche innerhalb der Vielzahl von Taschen.

Vorzugsweise ist die zumindest eine Überwachungseinheit dabei ausgebildet und eingerichtet, die Kennung mindestens einer der Vielzahl Taschen zu erfassen und mit den erfassten Daten der mindestens einen Tasche an die Steuereinheit zu übermitteln. Damit ermöglicht die Erfindung, dass erfasste Daten und Kennung einer Tasche miteinander verknüpft der Steuereinheit zugeführt werden können. Damit kann der bestimmte Zustand einfach, bei geringer Fehleranfälligkeit der korrekten Tasche zugeordnet werden. Das Erfassen der Kennung kann dabei insbesondere ein Auslesen der Kennung aus einer PLC (programmable logic controller), HLC (high level control) und/oder WCS (Warehouse Control System) umfassen.

Ein weiterer Aspekt der Erfindung betrifft ein Verfahren zum Überprüfen eines Zustands, insbesondere eines Entladezustands und/oder Schließzustands, einer Tasche in einem Taschenförderer, insbesondere in einem erfindungsgemäßen Taschenförderer, wobei das Verfahren die Schritte aufweist:
- Fördern mindestens einer Tasche, vorzugsweise einer Vielzahl Taschen, besonders bevorzugt eines Batchs aus einer bestimmten Anzahl von Taschen, entlang des Taschenförderers;
- Zuführen der Tasche einer Entladestation und/oder einer Schließstation des Taschenförderers; und
- Überprüfen eines Zustands der Tasche mittels eines, insbesondere visuellen, Erfassens der Tasche in Förderrichtung der Vielzahl Taschen hinter oder direkt an der Entladestation und/oder hinter oder direkt an der Schließstation.

Dadurch, dass das Überprüfen anhand eines Erfassens der Tasche erfolgt, kann der Zustand unmittelbar anhand eines erfassten Merkmals der Tasche überprüft werden. Dies hat gegenüber einem Verfahren, dass ein Entladen basierend auf einem erfassten, abgeworfenen Gegenstand ermittelt, eine Zuordnung zu einer bestimmten Tasche vereinfacht ist und eine Fehleranfälligkeit somit reduziert werden kann. Das Bestimmen des Zustands kann dabei insbesondere basierend auf einem Vergleichen des erfassten Merkmals der mindestens einen Tasche mit einem Sollzustand des Merkmals der mindestens einen Tasche erfolgen. Zum Erfassen kann insbesondere ein Sensor verwendet werden. Weiterhin kann das Erfassen aus mehr als einer Raumrichtung erfolgen.

Insbesondere kann ein Erfassen von einer Unterseite der Tasche erfolgen. Dies ist insbesondere vorteilhaft, wenn zum Entladen der Tasche ein Boden der Tasche geöffnet und/oder zum Schließen der Tasche der Boden der Tasche geöffnet wird. Denn ein Öffnungszustand des Taschenbodens kann so direkt erfasst werden. Bevorzugt kann ein Überprüfen des Schließzustands anhand eines Überprüfens des Schließzustands des Bodens der Tasche erfolgen, indem vorzugsweise ein Abstand zweier Taschenbodenhälften zum Verschließen des Taschenbodens ermittelt wird.

Der erfindungsgemäße Taschenförderer ist insbesondere zur Durchführung des erfindungsgemäßen Verfahrens geeignet. Die für den erfindungsgemäßen Taschenförderer offenbarten Details und Vorteile sind auf das erfindungsgemäße Verfahren übertrag- und anwendbar und umgekehrt.

Weitere Einzelheiten der Erfindung werden anhand der nachstehenden Figur erläutert. Dabei zeigt:

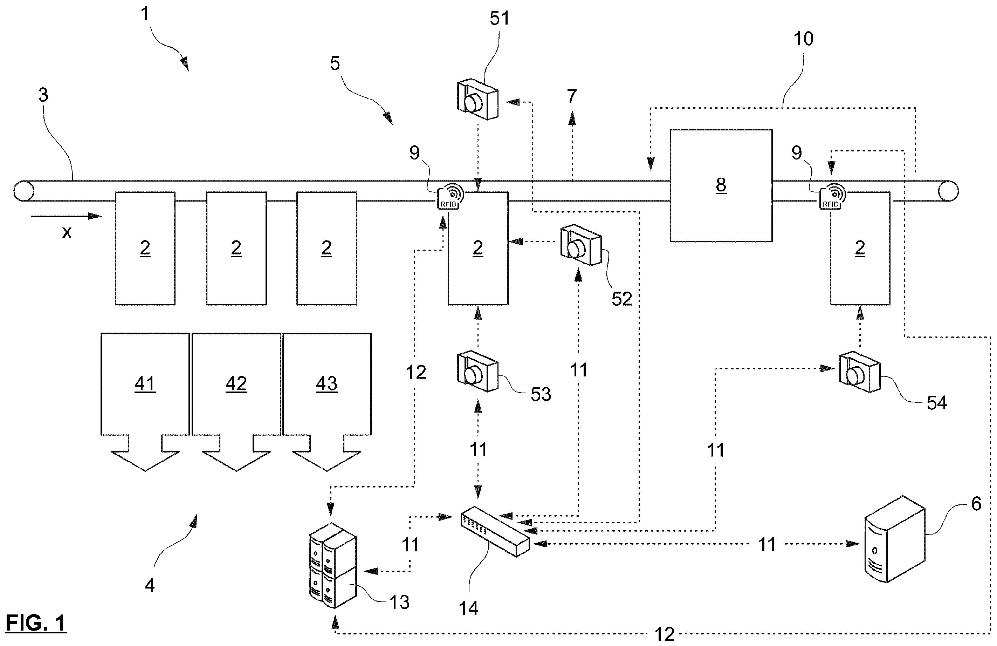

- Figur 1: ein Ausführungsbeispiel eines erfindungsgemäßen Taschenförderers.

Figur 1 zeigt in schematischer Darstellung eine Ausführungsform eines als Taschensorter ausgeführten Taschenförderers 1. Eine Vielzahl Taschen 2, die zum automatischen Entladen einen Boden öffnen und schließen können, wird entlang einer Förderstrecke 3 des Taschenförderers gefördert. Der Taschenförderer 1 weist dabei zum automatischen Entladen der Vielzahl Taschen 2 eine Entladestation 4 mit mehreren Entladestellen 41, 42, 43 auf. Weiterhin weist der Taschenförderer 1 eine in Förderrichtung x hinter der Entladestation angeordnete Schließstation 8 auf.

Dabei weist der Taschenförderer zudem eine Überwachungseinheit 5 mit mehreren Sensoren 51, 52, 53, 54 auf. Die Sensoren 51, 52, 53, 54 sind dabei alle als TOF-Sensoren ausgebildet. In einem alternativen Ausführungsbeispiel kann nur der Sensor 52 als TOF-Sensor ausgebildet sein. Die weiteren Sensoren 51, 52, 53 können dann als Kamera, insbesondere echtzeitfähige Kamera ausgebildet sein. In weiteren, alternativen Ausführungsbeispielen kann zumindest einer der Sensoren 51, 52, 53, 54 als LiDAR (Light detection and ranging), APD (avalanche photodiode, Lawinenphotodiode), SPAD (single-photon avalanche diode), Ultraschallsensor, Sonar sowie ein Radar und/oder Mikrowellensensor für FMCW (frequency-modulated continuous-wave radar) oder UWB (Ultra-wideband) ausgebildet sein.

Die Sensoren 51, 52, 53 sind dabei in Förderrichtung x direkt hinter der Entladestation 4 angeordnet und so positioniert, dass der Sensor 51 eine Tasche 2 von oben, der Sensor 52 von einer Längsseite und der Sensor 53 von einer Unterseite visuell erfasst. So kann mittels des Sensors 51 von der Oberseite der Tasche 2 ein Innenvolumen der Tasche 2 visuell erfasst werden. Der Sensor 53 kann von der Unterseite visuell erfassen, ob der Boden der Tasche 2 geöffnet oder geschlossen ist. Ist der Boden geöffnet, kann auch der Sensor 53 ein Innenvolumen der Tasche 2 visuell erfassen. Der Sensor 52 erlaubt wiederum eine Dickenbestimmung der Tasche 2, über die auf einen Entladezustand der Tasche 2 geschlossen werden kann.

Der Sensor 54 ist in Förderrichtung x direkt hinter der Schließstation 8 angeordnet und so positioniert, dass er eine Tasche 2 von einer Unterseite visuell erfasst. So kann der Sensor 54 visuell erfassen, ob ein Boden der Tasche 2 geöffnet oder geschlossen ist.

Der Taschenförderer 1 ist dabei ausgebildet und eingerichtet, ein Verfahren zum Überprüfen eines Zustands einer Tasche 2 in dem Taschenförderer 1 durchzuführen, das die folgenden Schritte aufweist:
- Fördern mindestens einer Tasche 2, vorzugsweise einer Vielzahl Taschen 2, besonders bevorzugt eines Batchs aus einer bestimmten Anzahl von Taschen 2, entlang des Taschenförderers 1;
- Zuführen der Tasche 2 der Entladestation 4 und der Schließstation 8 des Taschenförderers 1; und
- Überprüfen eines Zustands, hier eines Entladezustands und/oder Schließzustands, der Tasche 2 mittels der Sensoren 51, 52, 53, 54 in Förderrichtung x der Vielzahl Taschen 2 hinter der Entladestation 4 oder hinter der Schließstation 8.

Das Überprüfen umfasst dabei neben dem visuellen Erfassen der Tasche 2 ein Bestimmen des Entladezustands- und/oder des Schließzustands basierend auf dem visuellen Erfassen. Hierzu umfasst der Taschenförderer 1 eine als high-level control ausgeführte Steuereinheit 6, die ausgebildet und eingerichtet ist, von den Sensoren 51, 52, 53, 54 beim visuellen Erfassen ermittelte Daten zu empfangen und zu analysieren. Basierend auf dem Analysieren kann die Steuereinheit 6 dann beispielsweise anhand der von den Sensoren 51, 52, 53 visuell erfassen Daten den Entladezustand der Tasche bestimmen und/oder anhand der von dem Sensor 54 visuell erfassen Daten den Schließzustand der Tasche 2 bestimmen. Die Steuereinheit 6 ist als eine zur der Überwachungseinheit 5 separate Einheit ausgebildet. In anderen, nicht gezeigten Ausführungsbeispielen können Überwachungseinheit 5 und Steuereinheit 6 als eine Einheit ausgeführt sein.

Zum Übermitteln der erfassten Daten sind die Sensoren 51, 52, 53, 54 und die Steuereinheit 6 hier kabelgebunden miteinander verbunden. Im in der Fig. 1 gezeigten Ausführungsbeispiel erfolgt die Kommunikation dabei mittels Ethernet 11, indem die Steuereinheit 6 und die Sensoren 51, 52, 53, 54 über einen Netzwerkswitch 14 verbunden sind. Die Kommunikation zwischen Steuereinheit 6 und Sensoren 51, 52, 53, 54 kann in anderen Ausführungsbeispielen anders realisiert sein, insbesondere kabellos.

Die Vielzahl Taschen 2 weist dabei jeweils eine individuelle Kennung 9 auf, die hier elektronisch als RFID-Transponder ausgeführt ist. Mittels einer als speicherprogrammierbare Steuerung ausgeführten Maschinensteuerung 13 kann diese Kennung 9 ausgelesen werden, wobei das Auslesen der Kennung 9 insbesondere parallel zum visuellen Erfassen durch die Sensoren 51, 52, 53 oder den Sensor 54 erfolgt. Hierzu kann die Maschinensteuerung 13 mit einem entsprechenden Lesegerät zum Auslesen der Kennung 9 verbunden sein, hier beispielsweise mittels Profinet 12.

Die ausgelesene Kennung 9 einer bestimmten Tasche 2 wird dann von der Maschinensteuerung 13 mit den visuell erfassten Daten durch die Sensoren 51, 52, 53 oder durch den Sensor 54 an die Steuereinheit 6 übermittelt. So können die visuell erfassten Daten der bestimmten Tasche 2 unkompliziert und mit geringer Fehlerquote eindeutig zugeordnet werden.

Die Steuereinheit 6 kann zum Analysieren der erfassten Daten maschinelles Lernen umfassen. So kann beispielsweise vorgesehen sein, dass ein in der Steuereinheit 6 hinterlegter Algorithmus zum Analysieren geeignet vortrainiert ist und im Betrieb laufend verbessert wird. Das maschinelle Lernen ermöglicht somit das effiziente Erkennen von Mustern und Merkmalen in den erfassten visuellen Daten. Weiterhin kann die Steuereinheit 6 Befehle zur Bildauswertung und/oder Bildbearbeitung umfassen, um eine Auswertung der visuell erfassten Daten zu ermöglichen.

Der Taschenförderer 1 ist hier ausgebildet und eingerichtet, basierend auf dem bestimmten Entladezustand und/oder dem bestimmten Schließzustand die jeweilige Tasche 2 der Vielzahl Taschen 2 einer Pufferstation, einer Abfertigungsstation 7 oder einer Schließstation 8 zuzuführen. Hierzu kann beispielsweise vorgesehen sein, dass die Steuereinheit 6, wo der bestimmte Zustand zugeordnet zur ausgelesenen Kennung 9 der jeweiligen Tasche 2 hinterlegt ist, basierend auf dem bestimmten Zustand das nächste Ziel der Tasche 2 ermittelt. Die Steuereinheit 6 kann das ermittelte Ziel dann an die Maschinensteuerung 13 übertragen, so dass die Tasche 2 dem nächsten Ziel entsprechend ihres Zustandes zugeführt werden kann.

Der Taschenförderer 1 kann somit ausgebildet und eingerichtet sein, basierend auf dem bestimmten Entladezustand eine Tasche 2 entweder der Abfertigungsstation 7 zum manuellen Überprüfen oder der Schließstation 8 zum Verschließen zuzuführen. Basierend auf dem bestimmten Schließzustand einer Tasche 2 kann der Taschenförderer 1 ausgebildet und eingerichtet sein, die Tasche 2 über eine Rückführung 10 erneut der Schließstation zuzuführen und zum erneuten Beladen an die Pufferstation oder direkt an eine Beladestation weiterzuleiten.

Die Taschen 2 können so ausgeführt sein, dass zum Entladen der Taschen 2 ein Boden der Taschen 2 geöffnet und/oder zum Schließen der Taschen 2 der Boden der Taschen 2 geschlossen wird. Dann kann beim Bestimmen vorgesehen sein, dass das Überprüfen des Schließzustands der Taschen 2 das Überprüfen des Schließzustands eines Taschenbodens der Taschen 2 aufweist, wobei vorzugsweise der Abstand zweier Taschenbodenhälften zum Verschließen des Taschenbodens ermittelt wird.

Die in der vorstehenden Beschreibung, in den Zeichnungen sowie in den Ansprüchen offenbarten Merkmale der Erfindung können sowohl einzeln als auch in beliebiger Kombination für die Verwirklichung der Erfindung wesentlich sein.

### Bezugszeichenliste

- 1: Taschenförderer
- 2: Tasche
- 3: Förderstrecke
- 4: Entladestation
- 5: Überwachungseinheit
- 6: Steuereinheit
- 7: Abfertigungsstation
- 8: Schließstation
- 9: Individuelle Kennung
- 10: Rückführung
- 11: Ethernet
- 12: Profinet
- 13: Maschinensteuerung
- 14: Netzwerkswitch
- 41, 42, 43: Entladestelle
- 51, 52, 53, 54: Sensor
- x: Förderrichtung

## Patentansprüche

1. Taschenförderer (1), insbesondere Taschensorter, mit einer Vielzahl Taschen (2), die entlang einer Förderstrecke (3) des Taschenförderers (1) gefördert sind, wobei der Taschenförderer (1) zumindest eine Entladestation (4) zum automatischen Entladen der Vielzahl Taschen (2) aufweist, **dadurch gekennzeichnet, dass** der Taschenförderer (1) zumindest eine Überwachungseinheit (5) aufweist, die in Förderrichtung (x) der Taschen (2) entlang der Förderstrecke (3) hinter oder direkt an der zumindest einen Entladestation (4) angeordnet ist und dazu ausgebildet und eingerichtet ist, mindestens eine der Vielzahl Taschen (2), insbesondere visuell, zu erfassen und basierend auf dem Erfassen einen Zustand, insbesondere durch Vergleichen des erfassten Istzustands der mindestens einen Tasche (2) mit einem Sollzustand der mindestens einen Tasche (2), der mindestens einen Tasche (2) zu bestimmen.

2. Taschenförderer (1) nach Anspruch 1, bei dem der bestimmte Zustand ein Entladezustand und/oder ein Schließzustand der mindestens einen Tasche (2) ist oder umfasst, insbesondere indem der Sollzustand der mindestens einen Tasche (2) einem geöffneten Zustand der Tasche (2) entspricht.

3. Taschenförderer (1) nach Anspruch 1 oder 2, bei dem die Überwachungseinheit (5) zum Erfassen mindestens einen Sensor (51, 52, 53, 54) aufweist, besonders bevorzugt mindestens einen TOF (Time of Flight)-Sensor, einen LiDAR (Light detection and ranging)-Sensor, eine APD (avalanche photodiode, Lawinenphotodiode), eine SPAD (single-photon avalanche diode), einen Ultraschallsensor, ein Sonar, ein Radar und/oder einen Mikrowellensensor.

4. Taschenförderer (1) nach einem der vorherigen Ansprüche, bei dem die Überwachungseinheit (5) ausgebildet und eingerichtet ist, mindestens eine der Vielzahl Taschen (2) zumindest von einer Seite zu erfassen.

5. Taschenförderer (1) nach Anspruch 4, bei dem die Überwachungseinheit (5) ausgebildet und eingerichtet ist, mindestens eine der Vielzahl Taschen (2) zumindest von einer Unter- und/oder Oberseite zu erfassen.

6. Taschenförderer (1) nach Anspruch 4 oder 5, bei dem die Überwachungseinheit (5) ausgebildet und eingerichtet ist, mindestens eine der Vielzahl Taschen (2) zumindest von einer Längsseite zu erfassen und insbesondere eine Dicke der mindestens einen Tasche (2) zu bestimmen.

7. Taschenförderer (1) nach einem der vorherigen Ansprüche, bei dem die zumindest eine Überwachungseinheit (5) zwei Sensoren (51, 52, 53, 54) umfasst, die mindestens eine der Vielzahl Taschen (2) von unterschiedlichen, insbesondere gegenüberliegenden und/oder rechtwinklig zueinander orientierten Seiten erfassen.

8. Taschenförderer (1) nach einem der vorherigen Ansprüche, aufweisend eine Steuereinheit (6), die ausgebildet und eingerichtet ist, von der zumindest einen Überwachungseinheit (5) beim Erfassen ermittelte Daten zu empfangen und zu analysieren und basierend auf dem Analysieren das Bestimmen des Zustands mindestens einer der Taschen (2) durchzuführen.

9. Taschenförderer (1) nach Anspruch 8, bei dem die Steuereinheit (6) zum Analysieren der erfassten Daten der zumindest einen Überwachungseinheit (5) maschinelles Lernen umfasst.

10. Taschenförderer (1) nach Anspruch 9, bei dem das maschinelle Lernen ein vorhergehendes Trainieren eines in der Steuereinheit (6) hinterlegten Algorithmus und ein laufendes Verbessern des Algorithmus umfasst.

11. Taschenförderer (1) nach einem der vorherigen Ansprüche, bei dem der Taschenförderer (1) basierend auf dem bestimmten Zustand die jeweilige Tasche (2) der Vielzahl Taschen (2) einer Pufferstation, einer Abfertigungsstation (7), einer Schließstation (8) oder einer Rückführung (10) zuführt.

12. Taschenförderer (1) nach einem der vorherigen Ansprüche, bei dem die Vielzahl Taschen (2) jeweils eine individuelle, insbesondere elektronische Kennung (9) aufweist.

13. Taschenförderer (1) nach Anspruch 12, bei dem die zumindest eine Überwachungseinheit (5) ausgebildet und eingerichtet ist, die Kennung (9) mindestens einer der Vielzahl Taschen (2) zu erfassen und mit den erfassten Daten der mindestens einen Tasche (2) an die Steuereinheit (6) zu übermitteln.

14. Verfahren zum Überprüfen eines Zustands, insbesondere eines Entladezustands und/oder eines Schließzustands, einer Tasche (2) in einem Taschenförderer (1), insbesondere in einem Taschenförderer (1) nach einem der vorherigen Ansprüche, wobei das Verfahren die Schritte aufweist:
- Fördern mindestens einer Tasche (2), vorzugsweise einer Vielzahl Taschen (2), besonders bevorzugt eines Batchs aus einer bestimmten Anzahl von Taschen (2), entlang des Taschenförderers (1);
- Zuführen der Tasche (2) einer Entladestation (4) und/oder einer Schließstation (8) des Taschenförderers (1); und
- Überprüfen eines Zustands der Tasche (2) mittels eines, insbesondere visuellen, Erfassens der Tasche in Förderrichtung (x) der Vielzahl Taschen (2) hinter oder direkt an der Entladestation (4) und/oder hinter oder direkt an der Schließstation (8).

15. Verfahren nach Anspruch 14, bei dem das Überprüfen ein Erfassen der Tasche (2) aus mehr als einer Raumrichtung umfasst.

16. Verfahren nach Anspruch 14 oder 15, bei dem das Überprüfen ein Analysieren der erfassten Daten umfasst, wobei das Analysieren das Verwenden maschinellen Lernens umfasst.

17. Verfahren nach einem der Ansprüche 14 bis 16, bei dem basierend auf dem Überprüfen ein Fördern der Tasche (2) in eine Pufferstation, eine Abfertigungsstation (7), in die Schließstation (8) und/oder in eine Rückführung (10) erfolgt.

18. Verfahren nach einem der Ansprüche 14 bis 17, bei dem zum Entladen der Tasche (2) ein Boden der Tasche (2) geöffnet und /oder zum Schließen der Tasche (2) der Boden der Tasche (2) geschlossen wird.

19. Verfahren nach einem der Ansprüche 14 bis 18, bei dem das Überprüfen des Schließzustands der Tasche (2) das Überprüfen des Schließzustands eines Taschenbodens der Tasche (2) aufweist, wobei vorzugsweise der Abstand zweier Taschenbodenhälften zum Verschließen des Taschenbodens ermittelt wird.
